# EUROPEAN PATENT APPLICATION

(11) **EP 4 831 723 A2**
(43) Date of publication of application: **28.10.2026**
(21) Application number: 26196581.8
(22) Date of filing: 18.12.2024
(51) Int. Cl.: G02C 7/02

(54) **METHOD FOR CALCULATING A DATA OF A SPECTACLE LENS**

(30) Priority: 20.12.2023 EP 23218718
(62) Document number(s) of the earlier application(s) in accordance with Art. 76 EPC: 24836676.7 / 4 824 605
(71) Applicant: Carl Zeiss Vision International GmbH, 73430 Aalen (DE)
(72) Inventor: Habtegiorgis, Selam Wondimu, 73430 Aalen (DE); Jester, Philipp, 73430 Aalen (DE); Liu, Yujing, 73430 Aalen (DE); Sharifi, Hamed, 73430 Aalen (DE); Karim, Waiz, 73430 Aalen (DE)
(74) Representative: Carl Zeiss AG - Patentabteilung

(57) **Abstract**

The present invention relates to a method being configured for calculating, by a computer, data of a spectacle lens for the purpose of a use of the data for a manufacture of the spectacle lens, the method comprising the step of generating data of a randomly modulated surface for said spectacle lens and the method being characterized in that said data of said randomly modulated surface resulting from an application of a continuous random surface modulation function or a scaled continuous random surface modulation function to a predefined surface for said spectacle lens.

## Description

The present invention relates to a spectacle lens according to the preamble of claim 1.

### Related prior art

WO 2021/260642 A1 discloses, for example in paragraph [0029], methods for forming one or more geometrically defined shapes and/or contour optical elements on a surface of an ophthalmic lens comprising: defining a modulation function to modify one or more parameters of the ophthalmic lens surface geometry in a predefined region of the ophthalmic lens and in a predefined direction; and forming one or more geometrically defined shapes and/or contour optical elements by applying the modulating function to the one or more parameters of the surface geometry of the ophthalmic lens to change the curvature of at least one of a front surface of the ophthalmic lens and/or a back surface of the ophthalmic lens. According to WO 2021/260642 A1, paragraph [00109], geometrically defined shape and/or contour optical elements refers to a region in or on the modulated lens surface wherein one or more parameter(s) of the surface geometry that defines the lens surface shape in this region is/are modified via the use of the modulation function to result in a different geometry compared to the base surface. According to WO 2021/260642 A1, paragraph [00110], the modulating function is a mathematical function to alter one or more parameters of the surface geometry that define the lens surface shape of the ophthalmic lens applied on a region of the lens and in a direction. According to WO 2021/260642 A1, paragraph [00111], the direction refers to a direction along which the modulating function is applied and may be angular, radial, vertical, horizontal, random, or quasi-random, inter alia, or a combination of one or more directions from any point on the ophthalmic lens.

### Problem to be solved

Departing from WO 2021/260642 A1, paragraph [00110] defining the modulating function as mathematical function applied to a starting surface geometry to create a modified geometry that is different to a base lens, the problem to be solved by the present invention is to create a modified geometry that is different to the base lens while simultaneously preventing habituation of an eye to said modified geometry.

### Summary of the invention

The problem is solved by the the spectacle lens according to claim 1.

The method is configured for calculating, by a computer, data of a spectacle lens for the purpose of a use of the data for a manufacture of the spectacle lens, the method comprising the step of
- generating data of a randomly modulated surface for said spectacle lens,

the method being characterized in that
said data of said randomly modulated surface resulting from an application of a continuous random surface modulation function or a scaled continuous random surface modulation function to a predefined surface for said spectacle lens,
said continuous random surface modulation function having a value greater than zero for each x,y position in a domain of said continuous random surface modulation function.

Preferably, the method is configured for calculating, by a computer, data of a spectacle lens for the purpose of a use of the data for a manufacture of the spectacle lens, the method comprising the step of
- generating data of a randomly modulated surface for said spectacle lens,

the method being characterized in that
said data of said randomly modulated surface resulting from an application of a continuous random surface modulation function or a scaled continuous random surface modulation function to a predefined surface for said spectacle lens.

Alternatively, the method is configured for calculating, by a computer, data of a spectacle lens for the purpose of a use of the data for a manufacture of the spectacle lens, the method comprising the step of
- generating data of a randomly modulated surface for said spectacle lens,

the method being characterized in that
said data of said randomly modulated surface resulting from an application of a continuous random surface modulation function or a scaled continuous random surface modulation function to a predefined surface for said spectacle lens,
said data of said randomly modulated surface being combined with data of an opposite predefined surface for said spectacle lens with an arbitrary rotation of said randomly modulated surface with respect to said opposite predefined surface.

"Data of a spectacle lens" is data configured for the purpose of a use of said data for a manufacture the spectacle lens. Preferably, said data of said spectacle lens is computer-readable data or in form of computer-readable data. Said computer-readable data may additionally contain manufacturing instructions for manufacturing the spectacle lens. Said manufacturing instructions may be computer-readable instructions for controlling one or more manufacturing machine(s) to manufacture the spectacle lens. Said computer-readable data may be (i) stored on a computer-readable storage medium, (ii) stored in a memory of a computer, (iii) embodied in or in the form of a data signal, (iv) transferred via a data signal, (v) retrievable from a data network. The computer-readable storage medium may be a non-transitory tangible computer-readable storage medium.

A "spectacle lens" is defined as in ISO 13666:2019(E), entry 3.5.2, as ophthalmic lens (3.5.1) worn in front of, but not in contact with, an eyeball. A front surface of the spectacle lens is as defined in ISO 13666:2019(E), entry 3.2.13, a surface of the spectacle lens (3.5.2) intended to be fitted away from an eye. A back surface of the spectacle lens is as defined in ISO 13666:2019(E), entry 3.2.14, a surface of the spectacle lens (3.5.2) intended to be fitted nearer to an eye.

"Generating" data of a randomly modulated surface for the spectacle lens comprises using a mathematical function to modify a predefined surface of a digital twin of said spectacle lens. The predefined surface of the digital twin of the spectacle lens is data of a predefined surface for said spectacle lens, said data of said predefined surface for said spectacle lens being configured for the purpose of a manufacture of said spectacle lens. The predefined surface of the digital twin of the spectacle lens is at least one of a predefined front surface of the digital twin of the spectacle lens and a predefined back surface of the digital twin of the spectacle lens, i.e., the predefined surface of the digital twin is at least one of a mathematical description of a front surface for said spectacle lens and a mathematical description of a back surface for said spectacle lens. The mathematical description of the front surface and the mathematical description of the back surface each is a mathematical formula describing a respective surface height z as a function of coordinates x and y. In other words, the respective mathematical description determines a z position of the respective surface in each x,y position. The mathematical descriptions preferably are closed mathematical descriptions.

The predefined front surface of the digital twin of the spectacle lens is defined analogously as in ISO 13666:2019(E), entry 3.2.13, as surface of the digital twin of the spectacle lens intended to be virtually positioned furthest to an eye model, for example a predefined eye model. The predefined back surface of the digital twin of the spectacle lens is defined analogously as in ISO 13666:2019(E), entry 3.2.14, as surface of the digital twin of the spectacle lens intended to be virtually positioned nearest to an eye model, for example a predefined eye model.

In the knowledge of an orientation of the front surface to the back surface, the mathematical description of at least one of the front surface and the back surface preferably result from an optimization towards an optical target for said spectacle lens.

The data of said randomly modulated surface for said spectacle lens is comprised in the data of the spectacle lens.

A "randomly modulated surface" for a spectacle lens is a modified version of the predefined surface for said spectacle lens.

A "continuous random surface modulation function" is a mathematical function of coordinates x and y that is defined by one parameter or more parameters. Said one parameter is determined by at least one of the group consisting of (i) one continuous probability distribution, (ii) more continuous probability distributions, (iii) one discrete probability distribution and (iv) more discrete probability distributions. Said more parameters are determined by at least one of the group consisting of (i) one continuous probability distribution, (ii) more continuous probability distributions, (iii) one discrete probability distribution, and (iv) more discrete probability distributions. Consequently, every realization of a defined continuous random surface modulation function differs, except when realizations do not differ coincidentally. The most common example of a continuous probability distribution is a normal distribution. The determination of said one parameter by at least one of the group consisting of (i) one continuous probability distribution, (ii) more continuous probability distributions, (iii) one discrete probability distribution and (iv) more discrete probability distributions preferably comprises at least one of the group consisting of a) one direct determination step, b) more direct determination steps, c) one indirect determination step, d) more indirect determination steps. The determination of said more parameters by at least one of the group consisting of (i) one continuous probability distribution, (ii) more continuous probability distributions, (iii) one discrete probability distribution, and (iv) more discrete probability distributions preferably comprises at least one of the group consisting of a) one direct determination step, b) more direct determination steps, c) one indirect determination step, d) more indirect determination steps. One parameter determined by one direct determination step or by more direct determination steps preferably means that said one parameter directly is a function or a function value of at least one of (i) one continuous probability distribution, (ii) more continuous probability distributions, (iii) one discrete probability distribution, and (iv) more discrete probability distributions. More parameters determined by one direct determination step or by more direct determination steps preferably means that each of said more parameters directly is a function or function value of at least one of (i) one continuous probability distribution, (ii) more continuous probability distributions, (iii) one discrete probability distribution, and (iv) more discrete probability distributions. One parameter determined by one indirect determination step or by more indirect determination steps preferably means that said one parameter results from a function or a function value of at least one of (i) one continuous probability distribution, (ii) more continuous probability distributions, (iii) one discrete probability distribution, and (iv) more discrete probability distributions. More parameters determined by one indirect determination step or by more indirect determination steps preferably means that each of said more parameters results from a function or a function value of at least one of (i) one continuous probability distribution, (ii) more continuous probability distributions, (iii) one discrete probability distribution, and (iv) more discrete probability distributions. For example, the determination of said more parameters comprises more indirect determination steps, i.e., the determination can be done by, as one step, determining a random pattern of discrete x,y positions using one continuous probability distribution or more continuous probability distributions and, as another step, determining for each of said discrete x,y positions, a discrete surface modulation value using said one or another continuous probability distribution or said more or other more continuous probability distributions. In this example, the more parameters defining said random function of coordinates x and y are then determined by fitting a mathematical function, said mathematical function parametrized by said more parameters, to said discrete surface modulation values at said discrete x,y positions.

A domain of said continuous random surface modulation function preferably is defined such that said domain is comprised in a domain of the predefined surface for the spectacle lens said continuous random surface modulation function is applied to. Said domain being comprised in said domain of the predefined surface for the spectacle lens said continuous random surface modulation function is applied to, preferably is a simply connected domain. Preferably, said domain is comprised in said domain of the predefined surface for the spectacle lens in that said domain coincides with at least one of 60%, 70%, 80%, 90% of the domain of the predefined surface for the spectacle lens. Preferably, said domain is comprised in said domain of the predefined surface for the spectacle lens in that said domain coincides with 60% to 90%, or with 70% to 90%, or with 80% to 90% of the domain of the predefined surface for the spectacle lens.

For example, if data of the predefined surface for the spectacle lens is defined within an area inside a radius of 40 mm around an x,y position of an optical centre of a digital twin of said spectacle lens, the domain of said random surface modulation function is equal to or smaller than said area. The optical centre of the digital twin of the spectacle lens is defined analogously as in ISO 13666:2019(E), entry 3.2.15, as intersection of an optical axis with a front surface of the digital twin of the spectacle lens. An optical centre of the spectacle lens is as defined in ISO 13666:2019(E), entry 3.2.15, an intersection of an optical axis (3.1.8) with a front surface (3.2.13) of the spectacle lens (3.5.2).

The predefined surface for the spectacle lens preferably is a spherical surface, the spherical surface as defined in ISO 13666:2019(E), entry 3.4.1, or an aspherical surface, the aspherical surface as defined in ISO 13666:2019(E), entry 3.4.3. The aspherical surface preferably is rotationally symmetric. Preferably, the domain of the continuous random surface modulation function is defined such that said domain is comprised in a domain of at least one of the predefined front surface and the predefined back surface, preferably the predefined front surface, said continuous random surface modulation function is applied to.

Preferably, the continuous random surface modulation function is a non-periodic mathematical function of coordinates x and y that is defined by the one parameter or the more parameters. Preferably, the continuous random surface modulation function has a value greater than zero for each x,y position in the domain of said continuous random surface modulation function.

In contrast to the continuous random surface modulation function that is described here, WO 2021/260642 A1 defines in paragraph [00110] modulating functions as surface modulation functions that are not random. Further, in contrast to the continuous random surface modulation function being a mathematical function of coordinates x and y, the modulating functions described in WO 2021/260642 A1 are mathematical functions of one independent variable only.

A random surface modulation function is "continuous", if a change of a value of said random surface modulation function is arbitrarily small when changes of arguments of said random surface modulation function are sufficiently small. Preferably, the random surface modulation function is continuous in x and y, i.e., if the change of the value of said random surface modulation function is arbitrarily small when changes of the arguments x and y of said random surface modulation function are sufficiently small.

In contrast to the continuous random surface modulation function that is described here, US 2022/0034179 A1 discloses a spectacle lens comprising scattering centres arranged in a pattern that includes a random variation in spacing between adjacent dots and/or a random variation in dot size. The scattering centres of US 2022/0034179 A1 can be positioned relative to a regular array of lattice sites, where each scattering centre is displaced in at least one dimension from a corresponding one of the lattice sites by an amount equal to or less than a jitter amplitude, the jitter amplitude being a fraction of a distance between adjacent lattice sites. The scattering centres of US 2022/0034179 A1 can have a dimension that varies randomly from a nominal value, the random variation being equal to or less than a jitter amplitude. The scattering centres of US 2022/0034179 A1 can have a volume that varies randomly from a nominal value, the random variation being equal to or less than a jitter amplitude. Alternatively or additionally, the spectacle lens according to US 2022/0034179 A1 may incorporate optical defocus. Thus, US 2022/0034179 A1 describes a random modulation of a surface that is discrete, i.e., non-continuous. A continuous random surface modulation as described here is assumed to have a larger effect in preventing habituation than a discrete random surface modulation as described in US 2022/0034179 A1.

A "scaled continuous random surface modulation function" is a continuous random surface modulation function multiplied by a scaling function. Said scaling function may be a mathematical function of coordinates x and y. Preferably, a value range of said scaling function is between 0 and 1, 0 and 1 included in said value range. Said scaling function is used to suppress or reduce surface modulation within predefined areas of the predefined surface for the spectacle lens when applying said scaled continuous random surface modulation function to said predefined surface for said spectacle lens. Said scaling function suppresses the surface modulation of said predefined surface for said spectacle lens where the value of said scaling function is 0. Said scaling function reduces the surface modulation of said predefined surface for said spectacle lens where the value of said scaling function is larger than 0 and smaller than 1. Preferably, the scaling function, being a mathematical function of coordinates x and y, has either i) a reflection symmetry along two perpendicular meridians or ii) a rotational symmetry, for example, a rotational symmetry around the optical centre of the digital twin of the spectacle lens.

A domain of said scaling function preferably is defined such that said domain is equal to the domain of the continuous random surface modulation function.

Using a sinusoidal spectacle lens modulation pattern as described in paragraph [0166] of EP 4 089 473 A1 and shown in figure 4a of EP 4 089 473 A1 as a scaling function, said scaling function having a value range between 0 and 1, 0 and 1 included in said value range, the continuous random surface modulation function multiplied with this scaling function allows to create island-shaped structures. In areas occupied by said island-shaped structures said scaled continuous random surface modulation function applied to the predefined surface for the spectacle lens results in the randomly modified surface.

Data of the randomly modulated surface is "resulting" from an application of a continuous random surface modulation function or a scaled continuous random surface modulation function to data of a predefined surface for the spectacle lens when said continuous random surface modulation function or said scaled continuous random surface modulation function is used to modify said data of said predefined surface for the spectacle lens. Modifying said data of said predefined surface for the spectacle lens means, for each x,y position in the domain of the continuous random surface modulation function or in the domain of the scaled continuous random surface modulation function, a location of a surface point at said x,y position is moved by an amount defined by the value of the continuous random surface modulation function at said x,y position or by the value of the scaled continuous random surface modulation function at said x,y position. The location of said surface point at said x,y position is moved by said amount either in z direction or in a direction along a surface normal at said x,y position. Preferably, each x,y position in the domain of the continuous random surface modulation function or in the domain the scaled continuous random surface modulation function is an arbitrary x,y position. If said data of said predefined surface for the spectacle lens is in form of a continuous mathematical function, when moving surface points in z direction, the application of said continuous random surface modulation function or said scaled continuous random surface modulation function to said continuous mathematical function is a simple addition of said continuous random surface modulation function to said continuous mathematical function or a simple addition of said scaled continuous random surface modulation function to said continuous mathematical function each resulting in a continuous mathematical function, i.e., data of the randomly modulated surface for the spectacle lens is in form of a continuous mathematical function. If said data of said predefined surface for the spectacle lens is discretized in form of discrete x,y,z positions, said discrete x,y,z positions preferably being arbitrary discrete x,y,z positions or predefined discrete x,y,z positions, when moving surface points in any direction, the value of said continuous random surface modulation function or the value of said scaled continuous random surface modulation function is calculated at each of the discrete x,y positions of said discrete x,y,z positions of said predefined surface for the spectacle lens. Each value of said continuous random surface modulation function at each of the discrete x,y positions or each value of said scaled continuous random surface modulation function at each of the discrete x,y positions is used to move said discrete x,y,z positions of said predefined surface for the spectacle lens by an amount defined by said value in a selected direction at a respective discrete x,y position. Preferably, the selected direction at each respective discrete x,y position is the z direction or a direction along a surface normal of said predefined surface for the spectacle lens at each respective discrete x,y position.

Preferably, the continuous random surface modulation function or the scaled continuous random surface modulation function is used to modify the data of said predefined surface for the spectacle lens to result in data of the randomly modulated surface such that a spatial frequency bandwidth in x direction of the surface modulation is smaller than a spatial frequency bandwidth in x direction of the predefined surface. Preferably, a spatial frequency bandwidth in y direction of the surface modulation is smaller than a spatial frequency bandwidth in y direction of the predefined surface. Preferably, a spatial frequency bandwidth in any direction within the x,y plane of the surface modulation is smaller than a spatial frequency bandwidth in a same direction within the x,y plane of the predefined surface. The discrete random surface modulation as described in US 2022/0034179 A1 does not allow to calculate function values of said discrete random surface modulation at arbitrary x,y positions. In other words, the discrete random surface modulation as described in US 2022/0034179 A1 does not allow to calculate function values of said discrete random surface modulation at x,y positions in between the predefined discrete x,y positions defined in US 2022/0034179 A1. Thus, the discrete random surface modulation as described in US 2022/0034179 A1 cannot be used to modify data of a surface discretized in form of arbitrary discrete x,y,z positions if the x,y positions of said arbitrary discrete x,y,z positions do not coincide with the predefined discrete x,y positions defined in US 2022/0034179 A1. In contrast, the continuous random surface modulation function or the scaled continuous random surface modulation function described here allows to modify data of said predefined surface of the spectacle lens discretized in form of arbitrary discrete x,y,z positions, as described above.

An x,y,z position, an x,y position, a discrete x,y,z position, a discrete x,y position each is defined in an x,y,z coordinate system which is defined as follows: A predefined point of each of the digital twin of the spectacle lens defines an origin of an x,y,z coordinate system and i) a surface normal or ii) a primary direction at said predefined point defines a z direction. An x,y direction is in a plane perpendicular to said surface normal or said primary direction. In said plane perpendicular to said surface normal or said primary direction an x direction and a y direction are perpendicular to each other. Said predefined point preferably is selected from the group consisting of a fitting point and an optical centre. The primary direction of the digital twin of the spectacle lens is defined analogously as in ISO 13666:2019(E), entry 3.2.25, as direction of a virtually represented line of sight (3.2.24), usually taken to be a horizontal, to an object at an infinite distance when assumed looking straight ahead in unaided vision. The primary direction of the spectacle lens is defined as in ISO 13666:2019(E), entry 3.2.25, as direction of a line of sight (3.2.24), usually taken to be a horizontal, to an object at an infinite distance measured with habitual head and body posture when looking straight ahead in unaided vision. The fitting point of the digital twin of the spectacle lens is defined analogously as in ISO 13666:2019(E), entry 3.2.34, a point on the front surface (3.2.13) of the digital twin of the spectacle lens stipulated for virtual positioning the digital twin relative to an eye model, for example a predefined eye model. The fitting point of the spectacle lens is as defined in ISO 13666:2019(E), entry 3.2.34, a point on the front surface (3.2.13) of the spectacle lens (3.5.2) stipulated by a manufacturer for positioning the spectacle lens in front of an eye. According and analogously to note 1 to entry 3.2.30 (centration point) of ISO 13666:2019(E), the optical centre (3.2.15) usually applies to a single vision spectacle lens (3.7.1) and a digital twin of the single vision spectacle lens. Further, according and analogously to note 1 to entry 3.2.30 (centration point) of ISO 13666:2019(E), the fitting point (3.2.24) usually applies to a) a position-specific single-vision spectacle lens (3.7.2) and a digital twin of the position-specific single-vision spectacle lens or b) a power-variation spectacle lens (3.7.7) and a digital twin of the power-variation spectacle lens.

Alternatively, a surface normal at either an apex of the front surface or an apex of the back surface each of the respective digital twin of the spectacle lens or the spectacle lens shall define an origin of an x,y,z coordinate system and a z direction. An x,y direction shall be in a tangential plane to either said front surface at the apex or said back surface at the apex. An x direction and a y direction shall be perpendicular to each other in said tangential plane.

Preferably, the method configured for calculating, by a computer, data of the spectacle lens for the purpose of the use of the data for the manufacture of the spectacle lens, the method comprising the step of generating data of a randomly modulated surface for said spectacle lens,
the method being characterized in that the continuous random surface modulation function is a non-periodic mathematical function.

Preferably, the continuous random surface modulation function is a non-periodic mathematical function of coordinates x and y that is defined by one parameter or more parameters, the one parameter being the one parameter of the continuous random surface modulation function, the more parameters being the more parameters of the continuous random surface modulation function. The continuous random modulation function being the non-periodic mathematical function of coordinates x and y and being defined by said one parameter or said more parameters underlines the random character of the randomly modulated surface resulting from the application of a non-periodic continuous random surface modulation function or a scaled non-periodic continuous random surface modulation function to the predefined surface of the spectacle lens. The application of the non-periodic continuous random surface modulation function or the scaled non-periodic continuous random surface modulation function to the predefined surface of the spectacle lens preferably excludes to the greatest possible extend any regularity for the randomly modulated surface.

Preferably, the method configured for calculating, by a computer, data of the spectacle lens for the purpose of the use of the data for the manufacture of the spectacle lens, the method comprising the step of generating data of a randomly modulated surface for said spectacle lens, the method being characterized in that said continuous random surface modulation function is multiplied with a scaling function to result in said scaled continuous random surface modulation function, said scaling function having either i) a reflection symmetry along two perpendicular meridians or ii) a rotational symmetry.

Preferably, the scaling function, being a mathematical function of coordinates x and y, has either i) a reflection symmetry along two perpendicular meridians or ii) a rotational symmetry, for example, a rotational symmetry around the optical centre of the digital twin of the spectacle lens.

As described before, the scaling function allows to create one area or more areas in which the scaling function has the value zero. In this area or in these areas the randomly modified surface coincides with the predefined surface for the spectacle lens. Surrounding such an area, the scaling function with reflection symmetry along two perpendicular meridians or with rotational symmetry allows to create one ring-shaped structure having a path within said one ring-shaped structure starting from a point within said one ring-shaped structure and ending in said point again, said path within said one ring-shaped structure surrounding the area where the predefined surface for the spectacle lens is preserved due to the scaling function being zero. Surrounding such areas, the scaling function with reflection symmetry along two perpendicular meridians or with rotational symmetry allows to create more ring-shaped structures each having a path within a same of said more ring-shaped structures starting from a point within said same ring-shaped structure and ending in said point again, said path within said same ring-shaped structure surrounding an area where the predefined surface for the spectacle lens is preserved due to the scaling function being zero. In an area occupied by said one ring-shaped structure or by said more ring-shaped structures the scaled continuous random surface modulation function applied to the predefined surface for the spectacle lens results in the randomly modified surface.

Preferably, the method configured for calculating, by a computer, data of the spectacle lens for the purpose of the use of the data for the manufacture of the spectacle lens, the method comprising the step of generating data of a randomly modulated surface for said spectacle lens, the method being characterized in that said continuous random surface modulation function has a value greater than zero for each x,y position in a domain of said continuous random surface modulation function.

Preferably, the continuous random surface modulation function is having a value greater than zero for each x,y position in the domain of said continuous random surface modulation function, i.e., the application of said continuous random surface modulation function to the predefined surface for the spectacle lens results in the randomly modified surface that does not comprise an x,y position coinciding at said x,y position with the predefined surface for the spectacle lens.

Preferably, the method configured for calculating, by a computer, data of the spectacle lens for the purpose of the use of the data for the manufacture of the spectacle lens, the method comprising the step of generating data of a randomly modulated surface for said spectacle lens, the method being characterized in that said scaled continuous random surface modulation function has a value equal to zero for each x,y position in a predefined area or in predefined areas of said domain of said continuous random surface modulation function.

Preferably, the scaled continuous random surface modulation function is having a value equal to zero when the continuous random surface modulation function is multiplied with a scaling function and said scaling function is having the value zero. Applying the scaled continuous surface modulation function to the predefined surface for the spectacle lens results in a randomly modulated surface which coincides with said predefined surface for the spectacle lens in a predefined area or in predefined areas in which the scaling function and thus the scaled continuous surface modulation function is having the value zero for each x,y position within said predefined area or said predefined areas. Applying the scaled continuous random surface modulation function to the predefined surface for the spectacle lens, said scaled continuous random surface modulation function having the value zero for each x,y position in said predefined area or for each x,y position in said predefined areas, allows to position said predefined area or said predefined areas such that the resulting randomly modulated surface coincides with the predefined surface for the spectacle lens, for example, in an area comprising the optical centre or the fitting point of the digital twin of the spectacle. This in turn, after manufacturing the spectacle lens allows a spectacle lens wearer to perceive a visual impression according to their prescribed power, if any. The prescribed power is as defined in ISO 13666:2019(E), entry 3.10.13.

Applying the scaled continuous random surface modulation function to the predefined surface for the spectacle lens, said scaled continuous random surface modulation function having the value zero for each x,y position in said predefined area or for each x,y position in said predefined areas, allows to position said predefined area or said predefined areas such that the resulting randomly modulated surface coincides with the predefined surface for the spectacle lens, for example, according to an existing spectacle lens design. For example, applying the scaled continuous random surface modulation function to the predefined surface for the spectacle lens, said scaled continuous random surface modulation function having the value zero for each x,y position in said predefined area or for each x,y position in said predefined areas, allows to position said predefined area or said predefined areas such that the resulting randomly modulated surface coincides with the predefined surface for the spectacle lens in areas according to a spectacle lens design as described in WO 2023/155984 A1. To position said predefined area or said predefined areas such that the resulting randomly modulated surface coincides with the predefined surface for the spectacle lens according to the existing spectacle lens design combines advantages inherent to said existing spectacle lens design with a habituation prevention due to the randomly modulated surface outside said predefined area or said predefined areas.

Since the scaling function reduces the surface modulation of said predefined surface for said spectacle lens where the value of said scaling function is larger than zero (0) and smaller than one (1), the scaled continuous random surface modulation function multiplied with said value greater than 0 and smaller than 1, ensures that a transition between
- said predefined area or said predefined areas, where the scaled continuous random surface modulation function is zero, and in which the randomly modified surface resulting from the application of the scaled continuous random surface modulation function and thus coincides with the predefined surface for said spectacle lens, and
- an area or areas where the scaled continuous random surface modulation function is larger than zero
is not a step.

A preselection of a first area or first areas on the predefined surface for the spectacle lens to which the continuous random surface modulation function shall not be applied to whereas in another preselected second area or in other preselected second areas on the predefined surface for the spectacle lens the continuous random surface modulation function shall be applied to does not equally result in a transition between said first and second area(s) not being a step.

A step between adjacent areas on the randomly modified surface for the spectacle lens is perceived by the spectacle lens wearer as image jumps and/or distortion reducing the spectacle lens wearer's comfort.

Preferably, the method configured for calculating, by a computer, data of the spectacle lens for the purpose of the use of the data for the manufacture of the spectacle lens, the method comprising the step of generating data of a randomly modulated surface for said spectacle lens,
the method being characterized in that data of said randomly modulated surface is combined with data of an opposite predefined surface for said spectacle lens with an arbitrary rotation of said randomly modulated surface with respect to said opposite predefined surface.

In case, the randomly modified surface is the modified version of a rotationally symmetric predefined surface for the spectacle lens, the combination with an opposite predefined surface preferably is such that the spectacle lens wearers prescribed power is implemented in the spectacle lens. Simultaneously, an arbitrary combination of said randomly modified surface and said opposite predefined surface adds an additional factor that prevents habituation, in particular in case, always a same randomly modified surface is used for combination but the opposite predefined surface changes, for example from time to time due to changes in the spectacle lens wearers prescribed power.

Preferably, the method configured for calculating, by a computer, data of the spectacle lens for the purpose of the use of the data for the manufacture of the spectacle lens, the method comprising the step of generating data of a randomly modulated surface for said spectacle lens,
the method being characterized in that said continuous random surface modulation function is determined by using at least one of the group consisting of a random bicubic spline function, random ellipsoid functions and a random wavelet decomposition.

There are various families of mathematical bases that fulfil the requirements for decomposition and reconstruction of a continuous mathematical function using a wavelet basis. For continuous mathematical functions, so called biorthogonal wavelets are usually used. Biorthogonal wavelets are denoted by the polynomial degree of their scaling functions. For example, the numbers 3.3 represent the polynomial degree of the two scaling functions common for biorthogonal wavelets. 3.3 here means that the first scaling function is of polynomial degree 3 as well as the second scaling function. Random wavelet functions are for example Haar, Daubechies, Mexican hat wavelet or biorthogonals of any type bior1.1, bior2.2, bior3.1, bior3.3, bior5.1, bior5.3, and so on, using random coefficients.

Preferably, the method configured for calculating, by a computer, data of the spectacle lens for the purpose of the use of the data for the manufacture of the spectacle lens, the method comprising the step of generating data of a randomly modulated surface for said spectacle lens, is characterized in that said domain of said continuous random surface modulation function is comprised in a domain of the predefined surface for the spectacle in that said domain of said continuous random surface modulation function coincides with the domain of the predefined surface for the spectacle in one of the following ranges:
- a range of 60% to 95%,
- a range of 65% to 90%,
- a range of 70% to 85%.

US 2023/0111585 A1 discloses a method for creating an ophthalmic lens to reduce myopia by determining a central region and a peripheral region in the baseline lens and computing a distortion pattern of bumps randomly located in the peripheral region such that the bumps have random size and random strength, wherein the location, size and strength are created using probability distribution functions. In embodiment 1 of US 2023/0111585 A1, describing the application of the method to a single vision lens, paragraph [0060] discloses that for the number of bumps a 20% filling ratio is desired. Embodiment 3 of US 2023/0111585 A1, describing the application of the method to a progressive lens with power addition, paragraph [0069] discloses a 10% filling ratio in the upper region, a 32% filling ratio in the nasal region, a 21% filling ratio in the temporal region, a 14% filling ratio in the lower region. Increasing the filling ratios disclosed in US 2023/0111585 A1 such that the domain of the continuous random surface modulation function is comprised in the domain of the predefined surface for the spectacle in that said domain of said continuous random surface modulation function coincides with the domain of the predefined surface for the spectacle in one the before-mentioned ranges is assumed to increase the efficacy in myopia prevention.

Preferably, the method configured for calculating, by a computer, data of the spectacle lens for the purpose of the use of the data for the manufacture of the spectacle lens, the method comprising the step of generating data of a randomly modulated surface for said spectacle lens,
the method being further configured to manufacture the spectacle lens according to said data.

The computer program configured for calculating data of a spectacle lens, the computer program comprises instructions which, when the program is executed by a computer, cause the computer to carry out the step:
- generating data of a randomly modulated surface for said spectacle lens,
said data of said randomly modulated surface resulting from an application of a continuous random surface modulation function or a scaled continuous random surface modulation function to a predefined surface for said spectacle lens.

Preferably, the computer program configured for calculating data of a spectacle lens, the computer program comprises instructions which, when the program is executed by the computer, cause the computer to carry out the step:
- generating data of a randomly modulated surface for said spectacle lens,
said data of said randomly modulated surface resulting from an application of a continuous random surface modulation function or a scaled continuous random surface modulation function to a predefined surface for said spectacle lens,
said continuous random surface modulation function having a value greater than zero for each x,y position in a domain of said continuous random surface modulation function.

Alternatively, the computer program configured for calculating data of a spectacle lens, the computer program comprises instructions which, when the program is executed by the computer, cause the computer to carry out the step:
- generating data of a randomly modulated surface for said spectacle lens,
said data of said randomly modulated surface resulting from an application of a continuous random surface modulation function or a scaled continuous random surface modulation function to a predefined surface for said spectacle lens,
said data of said randomly modulated surface being combined with data of an opposite predefined surface for said spectacle lens with an arbitrary rotation of said randomly modulated surface with respect to said opposite predefined surface.

Preferably, the respective computer program comprises instructions which, when the respective program is executed by the computer, cause the computer to carry out the method configured for calculating, by a computer, data of the spectacle lens for the purpose of the use of the data for the manufacture of the spectacle lens, as described before.

The respective computer program may be stored on a non-transitory tangible computer-readable storage medium, the respective computer program comprises instructions which, when the respective program is executed by a computer, cause the computer to carry out the method configured for calculating, by a computer, data of the spectacle lens for the purpose of the use of the data for the manufacture of the spectacle lens, as described before.

Preferably, a computer-readable storage medium has stored thereon a respective computer program described before.

Preferably, the respective computer-readable storage medium comprises instructions which, when executed by the computer, cause the computer to carry out the method configured for calculating, by a computer, data of the spectacle lens for the purpose of the use of the data for the manufacture of the spectacle lens, as described before.

The respective computer-readable storage medium may have stored thereon the computer program described before.

The respective computer-readable storage medium may be a non-transitory tangible computer-readable storage medium.

A computer-readable data carrier may have stored thereon one of the computer programs described before.

The data signal carries one of the computer programs described before.

The computer is configured to perform the step:
- generating data of a randomly modulated surface for a spectacle lens,
said data of said randomly modulated surface resulting from an application of a continuous random surface modulation function or a scaled continuous random surface modulation function to a predefined surface for said spectacle lens.

Preferably, the computer is configured to perform the step:
- generating data of a randomly modulated surface for a spectacle lens,
said data of said randomly modulated surface resulting from an application of a continuous random surface modulation function or a scaled continuous random surface modulation function to a predefined surface for said spectacle lens,
said continuous random surface modulation function having a value greater than zero for each x,y position in a domain of said continuous random surface modulation function.

Alternatively, the computer is configured to perform the step:
- generating data of a randomly modulated surface for a spectacle lens,
said data of said randomly modulated surface resulting from an application of a continuous random surface modulation function or a scaled continuous random surface modulation function to a predefined surface for said spectacle lens,
said data of said randomly modulated surface being combined with data of an opposite predefined surface for said spectacle lens with an arbitrary rotation of said randomly modulated surface with respect to said opposite predefined surface.

Preferably, the respective computer is configured to perform the method configured for calculating, by the computer, data of the spectacle lens for the purpose of the use of the data for the manufacture of the spectacle lens, as described before.

A data processing system may comprise a processor and a storage medium coupled to the processor, wherein the processor is adapted to perform the method configured for calculating, by a computer, data of the spectacle lens for the purpose of the use of the data for the manufacture of the spectacle lens, as described before, based on a computer program stored on the storage medium.

The spectacle lens comprises a ring-shaped structure surrounding an optical centre of the spectacle lens, the optical centre as defined in ISO 13666:2019(E), entry 3.2.15, said ring-shaped structure surrounding a domain of constant curvature of a lens surface, said lens surface being of constant curvature within said domain,
the spectacle lens is characterized in that
(i) in at least one x,y,z position within said domain of constant curvature of said lens surface, a reference spherical surface coincides with said lens surface, said reference spherical surface having said constant curvature, and
(ii) in a domain of said ring-shaped structure
   - in each x,y position, a difference of a z position of said ring-shaped structure minus a z position of said reference spherical surface results in a positive difference in z in the respective x,y position, said positive difference in z having a maximum value in said domain of said ring-shaped structure and a minimum value in said domain of said ring-shaped structure,
   - in each x,y position of at least one group of subdomains, said positive difference in z is
      ∘ above or equal to a sum of said minimum value plus a first proportion of a difference of said maximum value minus said minimum value and
      ∘ below a sum of said minimum value plus a second proportion of said difference of said maximum value minus said minimum value, where said second proportion is larger than said first proportion, said first proportion and said second proportion each being between 0 and 1, each subdomain of said at least one group of subdomains having a boundary that is not matching any other boundary of any other subdomain in said at least one group of subdomains.

A "ring-shaped" structure has a path within said ring-shaped structure that surrounds or encircles a structure-free domain of said ring-shaped structure from a point within said ring-shaped structure and ends in said point again. The structure-free domain of the ring-shaped structure is a domain of a lens surface outside a ring-shaped domain of the ring-shaped structure, said structure-free domain of said ring-shaped structure is surrounded or encircled by said ring-shaped domain of said ring-shaped structure. Preferably, the structure-free domain of the ring-shaped structure is in a vicinity of the ring-shaped domain of the ring-shaped structure, preferably separated from each other, along any direction from the optical centre of the spectacle lens towards a periphery of the spectacle lens, by an onset line of the domain of the ring-shaped structure. The structure-free domain of the ring-shaped structure preferably is a structure-free domain of the spectacle lens, preferably at least in the vicinity of the structure-free domain of the ring-shaped structure, whereby the structure-free domain of the ring-shaped structure comprises each x,y position of the structure-free domain of the ring-shaped structure that is structure-free in both surfaces, i.e., the front surface and back surface, of the spectacle lens. The structure-free domain of the spectacle lens is a domain of the lens surface outside the domain of the ring-shaped structure, whereby the structure-free domain of the spectacle lens comprises each x,y position that is structure-free in both surfaces of the spectacle lens. In other words, the ring-shaped structure surrounds or encircles a domain of the lens surface, said domain of the lens surface being preferably at least in the vicinity of the domain of the ring-shaped structure structure-free, whereby said lens surface is of constant curvature within said domain, said constant curvature preferably having a maximum deviation in curvature of 0.1 dioptres within a radius of 2.5 mm around a centre of said domain in all directions from the centre of said domain towards a periphery of the spectacle lens. Preferably, said constant curvature is having a maximum deviation in curvature of 0.07 dioptres or 0.05 dioptres, each within a radius of 2.5 mm around the centre of said domain in all directions from the centre of said domain towards a periphery of the spectacle lens. Preferably, the centre of said domain of constant curvature is defined as a centroid of a boundary of said domain, wherein said boundary of said domain is defined as a first position along any direction from the optical centre towards the periphery of the spectacle lens in which the deviation from said constant curvature is larger than said maximum deviation.

The ring-shaped "structure" is a ring-shaped domain of the spectacle lens having a surface power different to a surface power of a lens surface of the spectacle lens comprising said ring-shaped structure outside the domain of the ring-shaped structure. In other words, the ring-shaped structure is the ring-shaped domain of the lens surface of the spectacle lens having the surface power different of the surface power of the lens surface of the spectacle lens comprising said ring-shaped structure outside the ring-shaped domain of the ring-shaped structure. The surface power of the lens surface of the spectacle lens is the surface power outside the ring-shaped domain of the ring-shaped structure. The surface power of the lens surface of the spectacle lens is defined analogously as in ISO 13666:2019(E), entry 3.10.4, as a local ability of the lens surface of the spectacle lens to change a vergence of a bundle of rays at the surface in any position of said lens surface, i.e., as the local ability of the front surface of the spectacle lens to change the vergence of the bundle of rays at the front surface in any position of said front surface or as the local ability of the back surface of the spectacle lens to change the vergence of the bundle of rays at the back surface in any position of said back surface. Analogously as in note 1 to entry 3.10.4 of ISO 13666:2019(E), the surface power of a respective lens surface of the spectacle lens is determined (i) from a local radius or local radii of the front surface and a refractive index (3.1.5) of the optical material (3.3.1) of the spectacle lens, and is calculated for light (3.1.2) incident or emergent in air or (ii) from a local radius or local radii of the back surface and a refractive index (3.1.5) of the optical material (3.3.1) of the spectacle lens, and is calculated for light (3.1.2) incident or emergent in air. The surface power of the ring-shaped structure is defined analogously as in ISO 13666:2019(E), entry 3.10.4, as a local ability of a surface of the ring-shaped structure to change a vergence of a bundle of rays incident at said surface in any position of said surface. As in note 1 to entry 3.10.4 of ISO 13666:2019(E), the surface power of the ring-shaped structure is determined from a local radius or local radii of the surface of the ring-shaped structure and a refractive index (3.1.5) of a material of the ring-shaped structure, and is calculated for light (3.1.2) incident or emergent in air. The refractive index of the material of the ring-shaped structure preferably is assumed to be a same refractive index as of an optical material of the spectacle lens, the optical material as defined in ISO 13666:2019(E), entry 3.3.1.

The ring-shaped structure surrounds or encircles the domain of the lens surface whereby the lens surface is of constant curvature within said domain, said constant curvature preferably having a maximum deviation in curvature of 0.1 dioptres within a radius of 2.5 mm around a centre of said domain in all directions from the centre of said domain towards a periphery of the spectacle lens. Preferably, said constant curvature is having a maximum deviation in curvature of 0.07 dioptres or 0.05 dioptres, each within a radius of 2.5 mm around the centre of said domain in all directions from the centre of said domain towards a periphery of the spectacle lens. Preferably, the centre of said domain of constant curvature is defined as a centroid of a boundary of said domain, wherein said boundary of said domain is defined as a first position along any direction from the optical centre towards the periphery of the spectacle lens in which the deviation from said constant curvature is larger than said maximum deviation.

In at least one x,y,z position within said domain in which the lens surface is of constant curvature, the lens surface and a reference spherical surface coincide, whereby said reference spherical surface has said constant curvature, i.e., said reference spherical surface and said lens surface are of an identical constant curvature. Within the domain of the ring-shaped structure, the structure is characterized in that in each x,y position, a difference of a z position of said ring-shaped structure minus a z position of said spherical reference surface results in a positive difference in z in the respective x,y position.

Preferably, in each x,y position within the domain in which the lens surface is of constant curvature, the spectacle lens is calculated to provide an ordered power to the spectacle lens wearer. In other words, in each x,y position within the domain in which the lens surface is of constant curvature, both said lens surface and an opposite lens surface to said lens surface are calculated to provide together the ordered power to the spectacle lens wearer, and thus allowing the spectacle lens wearer to perceive the visual impression according to an individual prescribed power. The ordered power is as defined in ISO 13666:2019(E), entry 3.10.14.

Preferably, the domain in which the lens surface is of constant curvature comprises the optical centre of the spectacle lens and is surrounded or encircled by the ring-shaped structure. Along any line through the optical centre, opposite onsets of the ring-shaped structure towards the periphery of the spectacle lens preferably have a distance to each other in one of the following ranges: a distance in a range of 5 mm to 15 mm, a distance in a range of 6 mm to 14 mm, a distance in a range of 7 mm to 13 mm, a distance in a range of 8 mm to 12 mm.

An onset of the ring-shaped structure is a first position along any direction from the optical centre of the spectacle lens towards a periphery of the spectacle lens, in which the surface power of the ring-shaped structure deviates from the constant surface power of the domain in which the lens surface is of constant curvature. The onset line passes each first position along any direction from the optical centre of the spectacle lens towards a periphery of the spectacle lens, in which the surface power of the ring-shaped structure deviates from the constant surface power of the domain in which the lens surface is of constant curvature.

In a domain of the ring-shaped structure, in each x,y position, a difference in a z position of said ring-shaped structure minus a z position of the reference spherical surface results in a positive difference in z in the respective x,y position. Said positive difference in z has a maximum value in said domain of said ring-shaped structure and a minimum value in said domain of said ring-shaped structure.

In the domain of the ring-shaped structure there is at least one group of subdomains. In the domain of the ring-shaped structure, in each x,y position of said at least one group of subdomains, the positive difference in z is
∘ above or equal to a sum of the minimum value of the positive difference in z plus a first proportion of a difference of the maximum value of the positive difference in z minus said minimum value of said positive difference in z,
∘ below a sum of said minimum value of said positive difference in z plus a second proportion of the difference of the maximum value of the positive difference in z minus said minimum value of said positive difference in z. The second proportion is larger than the first proportion. The first proportion and the second proportion are each between 0 and 1.

Each subdomain of the at least one group of subdomains has a boundary that is not matching any other boundary of any other subdomain in said at least one group of subdomains.

Preferably, in the domain of the ring-shaped structure there are at least three groups of subdomains. In this case, in the domain of the ring-shaped structure,
- the positive difference in z in said domain of said ring-shaped structure is having the maximum value in said domain of said ring-shaped structure and the minimum value in said domain of said ring-shaped structure,
- in each x,y position of a first group of subdomains, the positive difference in z, i.e., in the respective x,y position, the positive difference of the z position of the ring-shaped structure minus the z position of the reference spherical surface, is
   o above or equal to the minimum value of said positive difference in z,
   ∘ below a sum of said minimum value of said positive difference in z plus one third of a difference of the maximum value of said positive difference in z minus the minimum value of said positive difference in z,
- in each x,y position of a second group of subdomains, said positive difference in z is
   ∘ above or equal to said sum of said minimum value of said positive difference in z plus said one third of said difference of said maximum value of said positive difference in z minus said minimum value of said positive difference in z, and
   ∘ below a sum of said minimum value of said positive difference in z plus two thirds of a difference of said maximum value of said positive difference in z minus said minimum value of said positive difference in z,
- in each x,y position of a third group of subdomains, said positive difference in z is
   ∘ above or equal to said sum of said minimum value of said positive difference in z plus two thirds of said difference of said maximum value of said positive difference in z minus said minimum value of said positive difference in z, and
   ∘ below or equal to said maximum value.

In a "reference spherical surface", the spherical surface is as defined in ISO 13666:2019(E), entry 3.4.1, a part of an inside or outside surface of a sphere.

A "boundary" is a subset of x,y positions in a subdomain wherein each x,y position in said subset is directly adjacent to x,y positions outside said subdomain.

The boundary of the subdomain of a group of subdomains is "not matching" any other boundary of any other subdomain in said group of subdomains, if the boundary of said subdomain cannot be transformed in any other boundary of any other subdomain by translation in x direction and/or y direction.

The ring-shaped structure comprising, within the domain of said ring-shaped structure, at least one group of subdomains whose boundaries do not match each other, thereby fulfilling the before-described requirement with respect to the positive difference in z, ensures, that the viewing impression of the spectacle lens wearer in different viewing directions through the ring-shaped structure, is different and thus assumed to prevent habituation to the spectacle lens. As the ring-shaped structure surrounds the domain of constant curvature of the lens surface, said lens surface being of constant curvature within said domain, and in each x,y position within said domain of constant curvature the spectacle lens is preferably calculated to provide an ordered power to the spectacle lens wearer, the visual impression of the spectacle lens wearer is not impaired within said domain, thus preferably allowing the spectacle lens wearer to comfortably wear the spectacle lenses. Simultaneously, the ring-shaped structure described before is assumed to prevent habituation to the spectacle lenses as there is no repeating pattern within the domain of the ring-shaped structure. Preventing habituation to the spectacle lenses is assumed to retain the efficacy in myopia prevention.

Preferably, the spectacle lens comprising the ring-shaped structure surrounding the optical centre of the spectacle lens, said ring-shaped structure surrounding the domain of constant curvature of the lens surface, said lens surface being of constant curvature within said domain, is characterized in that (i) said ring-shaped structure is alternately surrounded by at least one further structure-free domain of at least one further ring-shaped structure wherein in each domain of said further ring-shaped structures, i.e. in each domain of said further ring-shaped structure or in each domain of said further ring-shaped structures,
- in each x,y position, a difference of a z position of each ring-shaped structure of said further ring-shaped structures minus a z position of said reference spherical surface results in a positive difference in z in the respective x,y position, said positive difference in z having a maximum value in a respective domain of each ring-shaped structure of said further ring-shaped structures and a minimum value in said respective domain of each ring-shaped structure of said further ring-shaped structures,
- in each x,y position of at least one group of subdomains, said positive difference in z is
   ∘ above or equal to a sum of said minimum value plus a first proportion of a difference of said maximum value minus said minimum value and
   ∘ below a sum of said minimum value plus a second proportion of said difference of said maximum value minus said minimum value, where said second proportion is larger than said first proportion, said first proportion and said second proportion each being between 0 and 1, each subdomain of said at least one group of subdomains having a boundary that is not matching any other boundary of any other subdomain in said at least one group of subdomains.

Preferably, in each x,y position within the at least one further structure-free domain the spectacle lens is calculated to provide the ordered power to the spectacle lens wearer.

The ring-shaped structure being alternately surrounded or encircled by further structure-free domains of further ring-shaped structures means that structure-free domains of further ring-shaped structures and further ring-shaped structures are positioned alternately on the surface of the spectacle lens, thereby surrounding the ring-shaped structure that in turn is surrounding the domain of constant curvature of the lens surface, said lens surface being of constant curvature within said domain. Exemplarily, the above is illustrated by a structure-free domain of a second ring-shaped structure surrounding the ring-shaped structure that is surrounding the domain of constant curvature of the lens surface. This preferably means that both the ring-shaped structure and the second ring-shaped structure are surrounding the optical centre of the spectacle lens. This also means that the ring-shaped structure and the second ring-shaped structure are separated from each other by the structure-free domain of the second ring-shaped structure. Along any line from the optical centre towards the periphery of the spectacle lens, the ring-shaped structure ends in each first position in which the surface power of the ring-shaped structure and the surface power of the lens surface comprising the ring-shaped structure do not deviate from each other anymore. Thus, an onset line passing each first position, in which the surface power of the ring-shaped structure and the surface power of the lens surface comprising the ring-shaped structure do not deviate from each other anymore, limits the ring-shaped structure in direction towards the periphery of the spectacle lens and separates the ring-shaped structure from the structure-free domain of the second ring-shaped structure. Along any line from the optical centre towards the periphery of the spectacle lens, the second ring-shaped structure starts in a first position in which the surface power of the lens surface comprising the second ring-shaped structure and the surface power of the second ring-shaped structure deviate from each other. Thus, an onset line passing each first position, in which the surface power of the lens surface comprising the second ring-shaped structure and the surface power of the second ring-shaped structure deviate from each other, limits the structure-free domain of the second ring-shaped structure towards the periphery of the spectacle lens and separates the structure-free domain of the second ring-shaped structure from the second ring-shaped structure. In a domain of said second ring-shaped structure,
- in each x,y position, a difference of a z position of said second ring-shaped structure minus a z position of said reference spherical surface results in a positive difference in z in the respective x,y position, said positive difference in z having a maximum value in said domain of said second ring-shaped structure and a minimum value in said domain of said second ring-shaped structure,
- in each x,y position of at least one group of subdomains, said positive difference in z is
   ∘ above or equal to a sum of said minimum value plus a first proportion of a difference of said maximum value minus said minimum value and
   ∘ below a sum of said minimum value plus a second proportion of said difference of said maximum value minus said minimum value, where said second proportion is larger than said first proportion, said first proportion and said second proportion each being between 0 and 1,
      each subdomain of said at least one group of subdomains having a boundary that is not matching any other boundary of any other subdomain in said at least one group of subdomains.

The ring-shaped structure being alternately surrounded or encircled by at least one further structure-free domain of at least one further ring-shaped structure preferably includes that the ring-shaped structure is surrounded or encircled by one further structure-free domain of one further ring-shaped structure, thus that the ring-shaped structure is surrounded or encircled by the structure-free domain of the second ring-shaped structure, as exemplarily described before, or that the ring-shaped structure is surrounded or encircles by a plurality of structure-free domains of a plurality of ring-shaped structures. The ring-shaped structure being surrounded or encircled by the plurality of structure-free domains of the plurality of ring-shaped structures means that the ring-shaped structure is surrounded by the structure-free domain of the second ring-shaped structure, as exemplarily described before, the second ring-shaped structure is surrounded by a structure-free domain of a third ring-shaped structure, the third ring-shaped structure, for example, in turn is surrounded by a structure-free domain of a fourth ring-shaped structure and so on. The third ring-shaped structure, the fourth ring-shaped structure and any further ring-shaped structure are separated from their respective structure-free domain as explained before with respect to the second ring-shaped structure and the structure-free domain of the second ring-shaped structure. In the domain of the third ring-shaped structure, in the domain of the fourth ring-shaped structure and in each domain of any further ring-shaped structure there exists at least one group of subdomains with the before-described properties.

When the ring-shaped structure is alternately surrounded by further structure-free domains of further ring-shaped structures, the spectacle lens provides with these further structure-free domains additional domains in which the spectacle lens preferably is calculated to provide the ordered power to the spectacle lens wearer. Thus, there exist, in viewing directions not through the domain of constant curvature, that is surrounded by the ring-shaped structure, and that preferably is calculated to provide the ordered power to the spectacle lens wearer, additional structure-free domains that provide clear vision to the spectacle lens wearer. In viewing directions not through the domain of constant curvature, the clear vision is interrupted by the at least one further ring-shaped structure whose respective domains have the before-described properties. Due to those properties a prevention of habituation to the spectacle lens is assumed while allowing the spectacle lens wearer to comfortably wear the spectacle lenses. Preventing habituation to the spectacle lenses is assumed to retain the efficacy in myopia prevention.

Preferably, the spectacle lens comprising the ring-shaped structure surrounding the optical centre of the spectacle lens, said ring-shaped structure surrounding the domain of constant curvature of the lens surface, said lens surface being of constant curvature within said domain, is characterized in that said first proportion of said difference of said maximum value minus said minimum value is 1/3 and said second proportion is 2/3 of said difference of said maximum value minus said minimum value.

With respect to the prevention to habituation and comfort in wearability of such a spectacle lens, reference is made to the above.

Preferably, the spectacle lens comprising the ring-shaped structure surrounding the optical centre of the spectacle lens, said ring-shaped structure surrounding the domain of constant curvature of the lens surface, said lens surface being of constant curvature within said domain, is characterized in that a width of the ring-shaped structure and a width of the at least one further ring-shaped structure is independently selected from one of the following widths:
- the width being in a range of 1 mm to 8 mm,
- the width being in a range of 1.5 mm to 7 mm,
- the width being in a range of 2 mm to 6 mm,
- the width being in a range of 2.5 mm to 5 mm.

At each point along a circumferential direction of the ring-shaped structure, a "width of the ring-shaped structure" at a respective point along the circumferential direction of the ring-shaped structure is a distance between opposite onsets of the ring-shaped structure perpendicular to the circumferential direction of the ring-shaped structure. The circumferential direction of the ring-shaped structure is defined by a central path between the onset lines i) separating, in direction towards the optical centre of the spectacle lens, the ring-shaped structure from the structure-free domain of the ring-shaped structure and, in direction towards the periphery of the spectacle lens, from the further structure-free domain of the further ring-shaped structure or ii) separating, in direction towards the optical centre of the spectacle lens, the ring-shaped structure from the structure-free domain of the ring-shaped structure and, in direction towards the periphery of the spectacle lens, from the lens surface comprising the ring-shaped structure but having a different surface power than the ring-shaped structure. The before also applies to the at least one further ring-shaped structure.

The width of the ring-shaped structure and the width of the at least one further ring-shaped structure may be same or different from each other, each width preferably being in one of the before-mentioned ranges. The width of further ring-shaped structures may be same or different from each other, each width preferably being in one of the before-mentioned ranges.

The ring-shaped structure and the at least one further ring-shaped structure having independently one of the before-mentioned widths are assumed to balance the prevention to habituation and a comfort in wearability.

Preferably, the spectacle lens comprising the ring-shaped structure surrounding the optical centre of the spectacle lens, said ring-shaped structure surrounding the domain of constant curvature of the lens surface, said lens surface being of constant curvature within said domain, is characterized in that at least one of the width of said ring-shaped structure and the width of the at least one further ring-shaped structure is a constant width.

The width of the ring-shaped structure is "constant" if at each point along the circumferential direction of the ring-shaped structure, the distance between opposite onsets of the ring-shaped structure perpendicular to the circumferential direction of the ring-shaped structure is identical.

The ring-shaped structure and the at least one further ring-shaped structure having independently one of the before-mentioned constant widths are assumed to balance the prevention to habituation and a comfort in wearability. Additionally, the constant width of the ring-shaped structure and the at least one further ring-shaped structure improves manufacturability of the spectacle lens. When calculating the data of the spectacle lens with the ring-shaped structure and the at least one further ring-shaped structure each of constant width, a simple rotationally symmetric scaling function can be used.

Preferably, the spectacle lens comprising the ring-shaped structure surrounding the optical centre of the spectacle lens, said ring-shaped structure surrounding the domain of constant curvature of the lens surface, said lens surface being of constant curvature within said domain, is characterized in that a width of each further structure-free domain of said at least one further structure-free domains is independently selected from one of the following widths:
- the width being in a range of 1 mm to 8 mm,
- the width being in a range of 1.5 mm to 7 mm,
- the width being in a range of 2 mm to 6 mm,
- the width being in a range of 2.5 mm to 5 mm.

At each point along a circumferential direction of a respective further structure-free domain, a "width of said respective further structure-free domain", at a respective point along the circumferential direction of said respective further structure-free domain is a distance between opposite onsets of neighbouring ring-shaped structures perpendicular to the circumferential direction of the said respective further structure-free domain. The circumferential direction of the respective further structure-free domain is defined by a central path between the onset lines separating, in direction towards the optical centre of the spectacle lens, the ring-shaped structure from a further structure-free domain of a neighbouring ring-shaped structure and, in direction towards the periphery of the spectacle lens, from the neighbouring ring-shaped structure.

The width of each further structure-free domain of said at least one further structure-free domains may be same or different from each other, each width preferably being in one of the before-mentioned ranges.

In case the ring-shaped structure and the at least one further ring-shaped structure are independently of constant width, preferably, the width of the respective further structure-free domain is constant as well. The width of the respective further structure-free domain is constant if at each point along the circumferential direction of the respective further structure-free domain, the distance between opposite onsets of the neighbouring ring-shaped structure perpendicular to the circumferential direction of the respective further structure-free domain is identical.

Each further structure-free domain of said at least one further structure-free domains having independently one of the before-mentioned widths is assumed to balance prevention to habituation and the comfort in wearability.

Preferably, the spectacle lens comprising the ring-shaped structure surrounding the optical centre of the spectacle lens, said ring-shaped structure surrounding the domain of constant curvature of the lens surface, said lens surface being of constant curvature within said domain, is characterized in that a 99 percentile of a surface power difference in said domain of said ring-shaped structure and a 99 percentile of a surface power difference in each domain of said further ring-shaped structures is within a maximum of 4.5 dioptres, said surface power difference being with respect to the surface power at the optical centre of the spectacle lens, said surface power difference resulting from said positive difference in z.

The 99 percentile is defined such that at 99% of x,y positions within said domain of said ring-shaped structure, the surface power difference relative to the optical centre of the spectacle lens is less than or equal to a maximum 4.5 dioptres.

Preferably, the 99 percentile of the surface power difference in said domain of said ring-shaped structure and the 99 percentile of the surface power difference in each domain of said further ring-shaped structures is within a maximum of 4.0 dioptres, said surface power difference being with respect to the surface power at the optical centre of the spectacle lens. The before given definition of the 99 percentile applies accordingly.

The 99 percentile of the surface power difference being within the maximum of 4.5 dioptres, preferably within the maximum of 4.0 dioptres, said surface power difference being with respect to the surface power at the optical centre of the spectacle lens, has the advantage not to cause discomfort in wearability while ensuring efficacy in myopia prevention, thus balancing comfort in wearability and efficacy in myopia prevention.

Preferably, the spectacle lens comprising the ring-shaped structure surrounding the optical centre of the spectacle lens, said ring-shaped structure surrounding the domain of constant curvature of the lens surface said lens surface being of constant curvature within said domain, is characterized in that a positive difference in surface power is different from 0 dioptre relative to a surface power at the optical centre of the spectacle lens in said domain of said ring-shaped structure and a positive difference in surface power is different from 0 dioptre relative to a surface power at the optical centre of the spectacle lens in each domain of said further ring-shaped structures, said positive difference in surface power resulting from said positive difference in z.

Having the ring-shaped structure surrounding the optical centre of the spectacle lens that, in each point of the domain of the ring-shaped structure has the positive difference in surface power that is different from 0 dioptre relative to the surface power at the optical centre of the spectacle lens ensures that a stimulus for myopia prevention is exerted on all azimuths of a peripheral retina.

Preferably, the spectacle lens comprising the ring-shaped structure surrounding the optical centre of the spectacle lens, said ring-shaped structure surrounding the domain of constant curvature of the lens surface said lens surface being of constant curvature within said domain,
is characterized in that
one ring-shaped structure surrounds the optical centre of the spectacle lens.

Preferably, said one ring-shaped structure extends to the periphery of the spectacle lens.

One ring-shaped structure surrounding the optical centre of the spectacle lens and preferably extending to the periphery of the spectacle lens is assumed to decrease the comfort in wearability compared to further ring-shaped structure surrounding further structure-free domains but to increase the efficacy in myopia prevention.

Preferably, the pectacle lens is obtained by a manufacturing method comprising calculating, by a computer, data of a spectacle lens for the purpose of a use of the data for a manufacture of at least one surface of the spectacle lens, the manufacturing method comprising:
based on applying a continuous random surface modulation function or a scaled continuous random surface modulation function to predefined surface data of said spectacle lens, generating data of a randomly modulated surface for said spectacle lens;
based on the generated randomly modulated surface data, manufacturing at least one randomly modulated surface of the spectacle lens;
characterized in that
said data of said randomly modulated surface resulting from the application of a continuous random surface modulation function or the scaled continuous random surface modulation function to predefined surface for said spectacle lens, said continuous random surface modulation function having a value greater than zero for each x,y position in a domain of said continuous random surface modulation function.

The data set comprises at least one kind of the following kinds of data:
(i) data of the spectacle lens, the spectacle lens as described before, the data of the spectacle lens being configured for the purpose of a use of of the data for a manufacture of the spectacle lens described before,
(ii) data of the spectacle lens, the spectacle lens as described before, the data of the spectacle lens being configured to be fed to one manufacturing machine or more manufacturing machines for manufacturing the spectacle lens described before,
(iii)data of the spectacle lens, the spectacle lens as described before, the data of the spectacle lens containing computer-readable instructions for controlling one manufacturing machine or more manufacturing machines to manufacture the spectacle lens as described before.

The data set may be stored on the computer-readable storage medium or carried by the data signal. The computer-readable medium may be the non-tangible computer-readable storage medium.

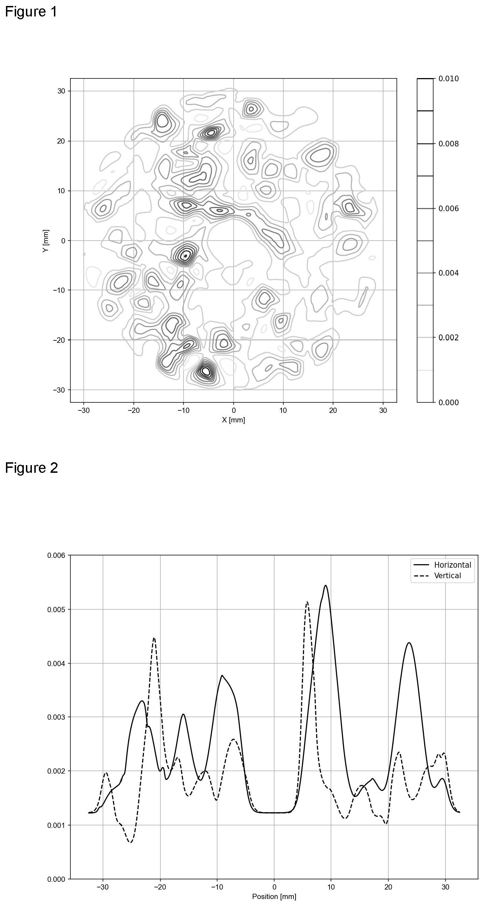

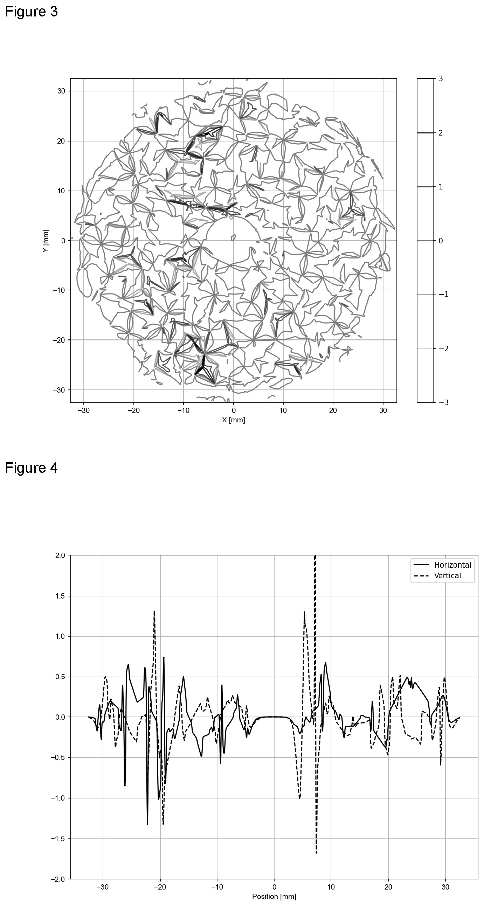

Example 1: Proceeding to generate a scaled continuous random surface modulation function by using a random bicubic spline modulation function is as follows:
1. Define equidistant two-dimensional jittered grid (x_i, y_i), i = 1, ..., n, defined by
   a. the diameter 65 mm of the area to be modulated and
   b. a step size of 3 mm (spacing between grid points in x- and y-direction).
   c. Add to every position a normally random distributed offset in x and y, so x_j = x_i + xn_i where xn_i is a random number N(0, sigma), with mean zero and sigma = 0.5
   d. Finally, the grid (x_i, y_i) is rotated by an angle alpha = 33 degrees
2. Pick random values z_i at every grid position (x_i, y_i) from an exponential distribution with parameter alpha = 0.03. This results in a point cloud.
3. Calculation of a spline function using bicubic splines f(x, y) such that f is an interpolator of the values z_i at the given random positions (x_i, y_i), meaning f(x_i, y_i) = z_i for all i = 1, ..., n.
4. Scale this function by an exponential scaling function f_damp to allow for a clear inner zone with a radius of r_clear of 5 mm and an outer clear zone with radius r_trt = 25.0 mm ${f}_{damp} = {e}^{- {\left(\frac{r - {r}_{trt}}{ω}\right)}^{α}} - {e}^{- {\left(\frac{r - {r}_{clear}}{ω}\right)}^{α}}$ using a scaling of omega = 5.0 and an exponent alpha = 6. This results in a scaling function.
5. The surface modulation is evaluated at a required two-dimensional grid (x_k, y_k), k=1, ..., m. Resulting values z_k are normalized and scaled to be in the range [0.0, 10.0µm]. The resulting modulation can be seen in Figure 1 (contour line plot of resulting scaled continuous random surface modulation function), corresponding cross-sections along x = 0 and y = 0 can be found in Figure 2 (cross-sections plot of resulting scaled continuous random surface modulation function).
6. Surface power of the modulation can be calculated by the curvature of the surface. Results are shown in Figure 3 (contour line plot of resulting surface power of the modulation) and Figure 4 (cross-section plot of resulting surface power of a randomly modulated surface when the scaled continuous random modulation function was applied to a plane).

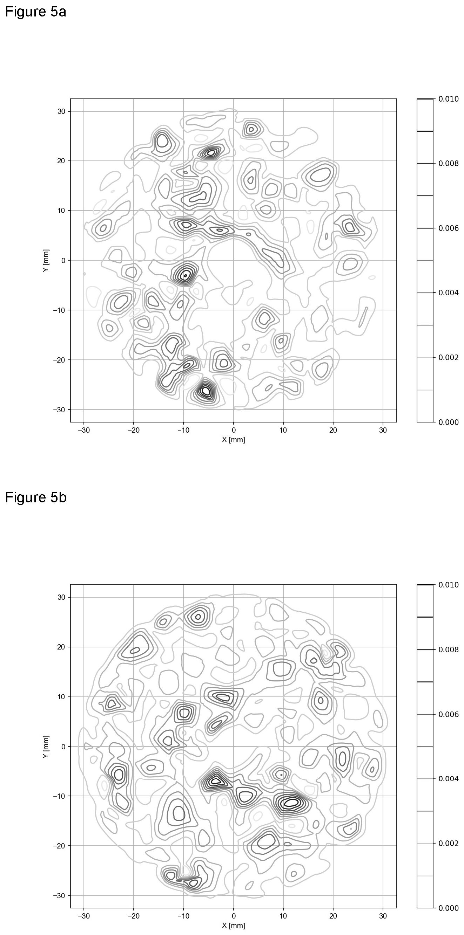

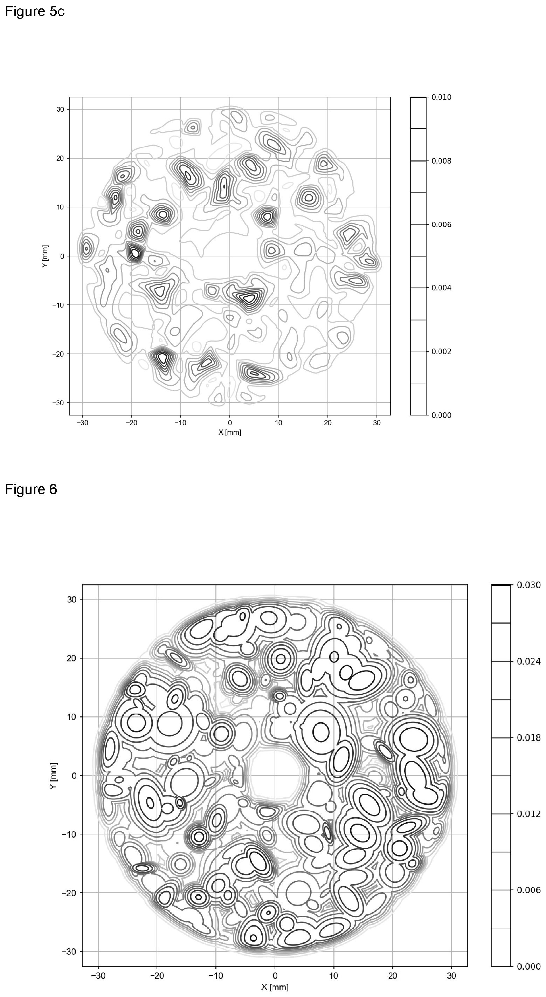

Different realizations of the continuous random modulation function result in different modulations. This can be seen in Figures 5a, 5b, 5c (three different realizations of the proceeding for example 1. All parameters are the same but different realizations of random positions and values).

Example 2: Proceeding to generate a scaled continuous random surface modulation function by using random ellipsoids, starting as in step 1 from example 1 with same parameters, to get a two-dimensional jittered grid (x_i, y_i), i = 1, ..., n. This is followed by the calculation of areas of ellipsoidal shape of random size, orientation and curvature, this means for a centered and rotated new grid ${x}_{j} = \left(x-{x}_{i}\right) ∗ cos {θ}_{j} - \left(y-{y}_{i}\right) ∗ sin {θ}_{j}$ ${y}_{j} = \left(x-{x}_{i}\right) ∗ sin {θ}_{j} + \left(y-{y}_{i}\right) ∗ cos {θ}_{j}$ with *θⱼ* picked from a random uniform distribution of angles between 0.0 and 180°. Heights of every ellipsoid are calculated along the following equation ${z}_{j} = \left({h}_{j}-{r}_{j}\right) + sqrt \left({r}_{j}^{2}-\left(\frac{{x}_{j}^{2}}{{sc}_{x}}+\frac{{y}_{j}^{2}}{{sc}_{y}}\right)\right)$ where h_j are maximal heights picked from a uniform distribution within [1, 30] µm, the scaling factors sc_x and sc_y are picked from a uniform distribution within [0.2, 2.0] and the radii r_j from a uniform distribution within [1000.0/5.0, 1000.0/0.5]. The resulting surface z_0 is the superposition by maximum of all ellipsoids z_j, so ${z}_{0} \left(x, y\right) = maximum \left(0.0,{z}_{j}\left(x, y\right)\right) for all j$

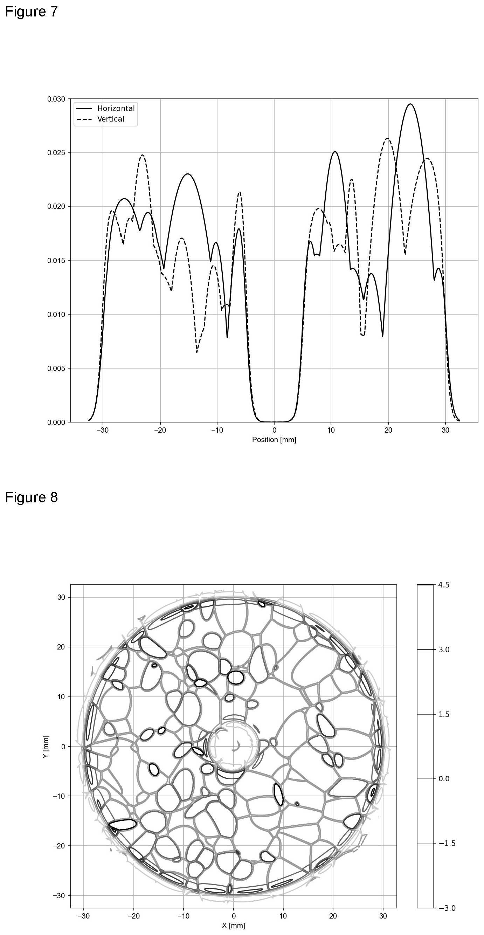

Said surface z_0 is used as continuous random surface modulation function. This continuous random surface modulation function is scaled according to step 4 of example 1 using the same parameter and is shown in Figure 6 (contour line plot of resulting modulation values for example 2), Figure 7 (cross-sections plot of resulting modulation values for example 2), Figure 8 (contour line plot of resulting surface power of a randomly modulated surface when the scaled continuous random modulation function according to example 2 was applied to a plane) and Figure 9 (cross-section plot of resulting surface power of a randomly modulated surface when the scaled continuous random modulation function for example 2 was applied to a plane).

Example 3: Proceeding to generate a scaled continuous random surface modulation function by using a specific example of a random wavelet modulation function is as follows:
1. Define an equidistant two-dimensional grid (*xᵢⱼ, yᵢⱼ*), *i, j* = 0, ..., 2¹⁰ fully covering the spectacle lens diameter of 65 mm.
2. Definition of the continuous random surface modulation function using one level of a wavelet decomposition
   a. Define an array of zero values for the grid from 1) *zᵢⱼ* = *0, i, j* = 0, ..., 2¹⁰
   b. The array *zᵢⱼ* is then decomposed for a defined type of wavelet *wvl = bior*3.3, i.e. a biorthogonal wavelet of order 3 for decomposition and reconstruction and maximal level *lₘₓ* = 4 (nomenclature as described in the PyWavelets Documentation, Release 1.3.0, The PyWavelets Developers, March 11, 2022). This results in four arrays per level representing the decomposed continuous random surface modulation function, ${d}_{ij} , {d}_{ij}^{H} , {d}_{ij}^{V} , {d}_{ij}^{D} , i , j = 0 , … , {n}_{lvl}$ where *dᵢⱼ* represents the coarse continuous random surface modulation function at level *lvl =* 0, ... , *lₘₓ* and ${d}_{ij}^{H} , {d}_{ij}^{V} , {d}_{ij}^{D}$ the horizontal, vertical and diagonal detail.
   c. For the coarsest level *lvl =* 0 pick values for *dᵢⱼ, i, j =* 0, ... , 70 from a uniform random distribution of the range [0, 1].
   d. Reconstruct the continuous random surface modulation function across all levels resulting in new *zᵢⱼ* ≠ 0*, i, j* = 0, ..., 2¹⁰.
3. Scale the continuous random surface modulation function to a maximal modulation height of 5 µm along steps 4) and 5) from example 1.

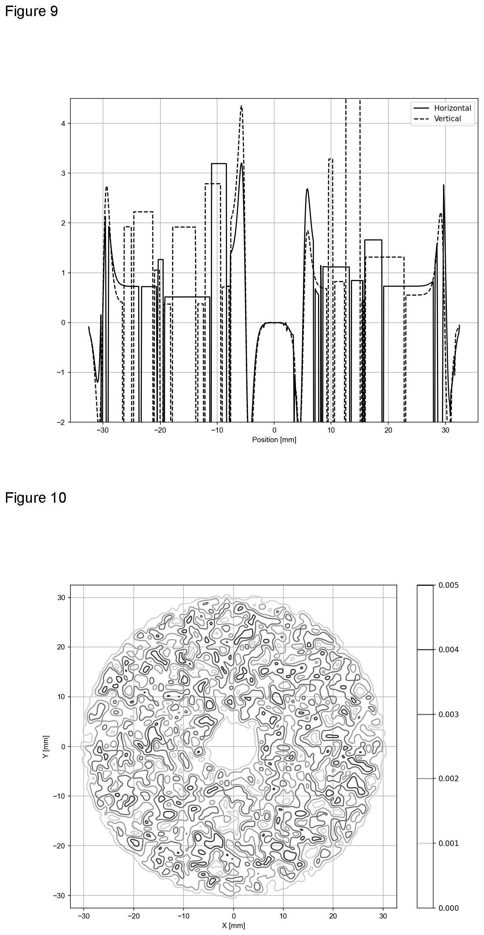

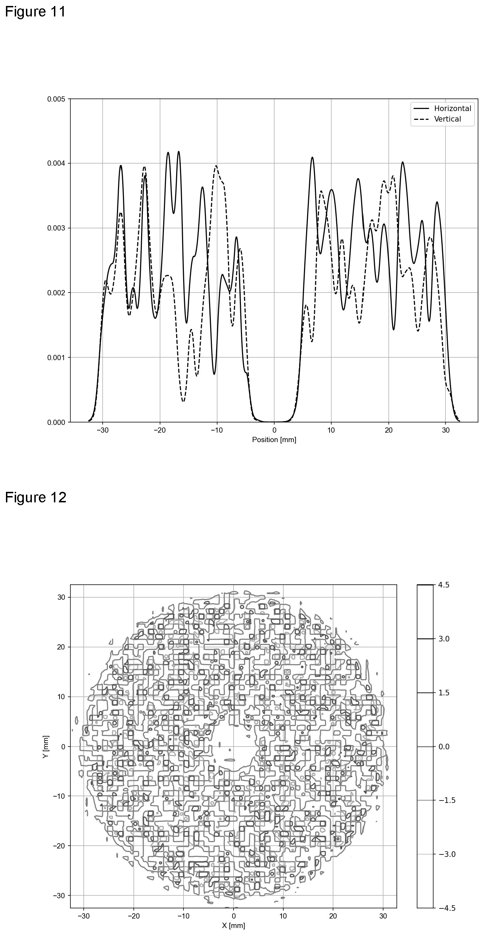

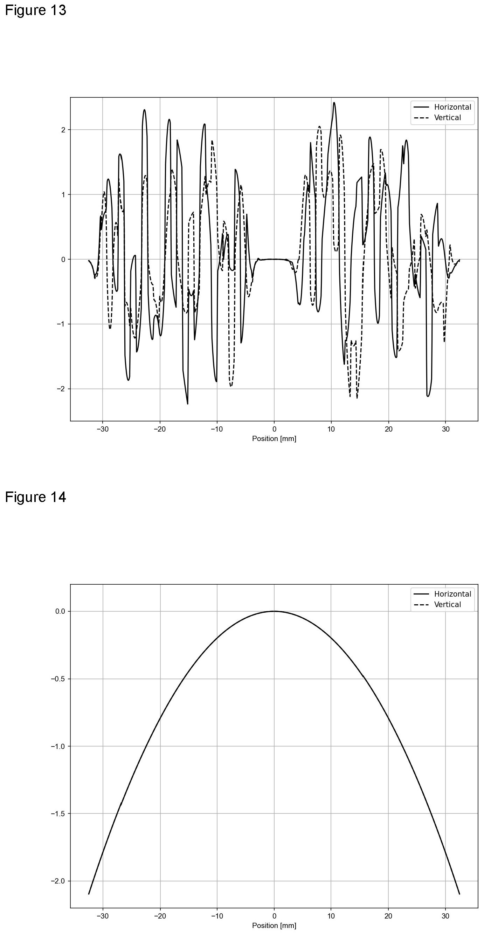

The resulting surface modulation is shown in Figure 10 (contour line plot of resulting scaled continuous random surface modulation function for example 3), Figure 11 (cross-sections plot of resulting scaled continuous random surface modulation function for example 3), Figure 12 (contour line plot of resulting surface power of a randomly modulated surface when the scaled continuous random modulation function for example 3 was applied to a plane) and Figure 13 (cross-section plot of resulting surface power of a randomly modulated surface when the scaled continuous random modulation function for example 3 was applied to a plane).

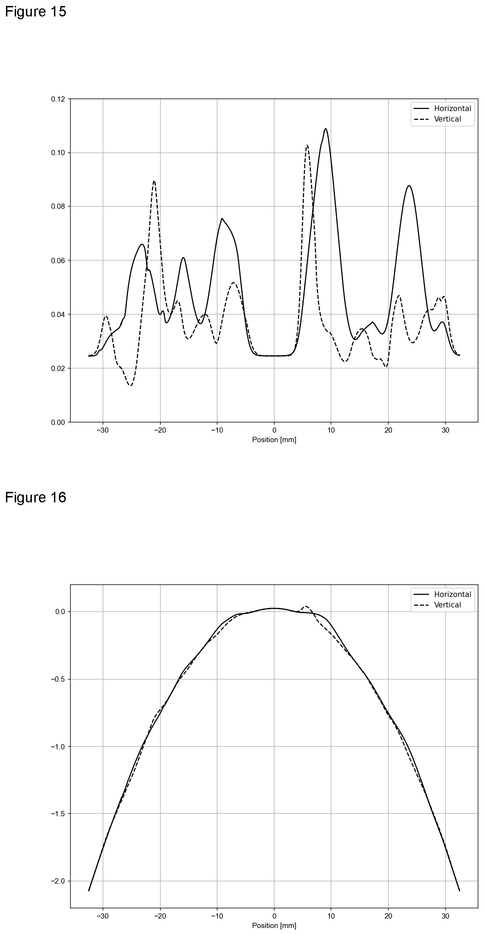

Application of continuous random surface modulation function to predefined surface for spectacle lens The simplest approach is the additive superposition along z-direction. This means the total z(x,y) positions of the randomly modified surface is given by ${z}_{total} \left({x}_{i}, {y}_{i}\right) : = {z}_{lens} \left({x}_{i}, {y}_{i}\right) + {z}_{modulation} \left({x}_{i}, {y}_{i}\right) , for all \left({x}_{i}, {y}_{i}\right)$ where *zₗₑₙₛ* defines the z(x,y) positions of the predefined surface for the spectacle lens (Figure 14, z(x,y) positions of a spherical predefined front surface for an exemplary spectacle lens with a front radius of 253.0 mm) and *z_{modulation}* the values of the scaled continuous random surface modulation function as described in examples 1, 2 and 3 (Figure 15, cross section plot of resulting scaled continuous random surface modulation function according to example 1). A horizontal and a vertical cross section through the z(x,y) positions of the randomly modified surface is shown in Figure 16 (cross section plot of resulting randomly modified surface resulting from applying the scaled continuous random surface modulation function according to example 1 to the predefined front surface of Figure 14).

## Claims

1. Spectacle lens comprising a ring-shaped structure surrounding an optical centre of the spectacle lens, the optical centre as defined in ISO 13666:2019(E), entry 3.2.15, said ring-shaped structure surrounding a domain of constant curvature of a lens surface, said lens surface being of constant curvature within said domain,
the spectacle lens being **characterized in that**
(i) in at least one x,y,z position within said domain of constant curvature of said lens surface, a reference spherical surface coincides with said lens surface, said reference spherical surface having said constant curvature, and
(ii) in said ring-shaped domain of said ring-shaped structure
- in each x,y position, a difference of a z position of said ring-shaped structure minus a z position of said reference spherical surface results in a positive difference in z in the respective x,y position, said positive difference in z having a maximum value in said domain of said ring-shaped structure and a minimum value in said domain of said ring-shaped structure,
- in each x,y position of at least one group of subdomains, said positive difference in z is
∘ above or equal to a sum of said minimum value plus a first proportion of a difference of said maximum value minus said minimum value and
∘ below a sum of said minimum value plus a second proportion of said difference of said maximum value minus said minimum value, where said second proportion is larger than said first proportion, said first proportion and said second proportion each being between 0 and 1,
∘ each subdomain of said at least one group of subdomains having a boundary that is not matching any other boundary of any other subdomain in said at least one group of subdomains.

2. Spectacle lens according to claim 1, **characterized in that**
(i) said ring-shaped structure is alternately surrounded by at least one further structure-free domain of at least one further ring-shaped structure wherein in each ring-shaped domain of said further ring-shaped structures
- in each x,y position, a difference of a z position of each ring-shaped structure of said further ring-shaped structures minus a z position of said reference spherical surface results in a positive difference in z in the respective x,y position, said positive difference in z having a maximum value in a respective domain of each ring-shaped structure of said further ring-shaped structures and a minimum value in said respective domain of each ring-shaped structure of said further ring-shaped structures,
- in each x,y position of at least one group of subdomains, said positive difference in z is
∘ above or equal to a sum of said minimum value plus a first proportion of a difference of said maximum value minus said minimum value and
∘ below a sum of said minimum value plus a second proportion of said difference of said maximum value minus said minimum value, where said second proportion is larger than said first proportion, said first proportion and said second proportion each being between 0 and 1,
each subdomain of said at least one group of subdomains having a boundary that is not matching any other boundary of any other subdomain in said at least one group of subdomains.

3. Spectacle lens according to any one of the preceding claims 1 and 2, **characterized in that** said first proportion of said difference of said maximum value minus said minimum value is 1/3 and said second proportion is 2/3 of said difference of said maximum value minus said minimum value.

4. Spectacle lens according to any one of the preceding claims 2 and 3, **characterized in that** a width of said ring-shaped structure and a width of said at least one further ring-shaped structure is independently selected from one of the following widths:
- the width being in a range of 1 mm to 8 mm,
- the width being in a range of 1.5 mm to 7 mm,
- the width being in a range of 2 mm to 6 mm,
- the width being in a range of 2.5 mm to 5 mm.

5. Spectacle lens according to claim 4, **characterized in that** at least one of said width of said ring-shaped structure and said width of said at least one further ring-shaped structure is a constant width.

6. Spectacle lens according to any one of the preceding claims 2 to 5, **characterized in that** a width of each further structure-free domain of said at least one further structure-free domains is independently selected from one of the following widths:
- the width being in a range of 1 mm to 8 mm,
- the width being in a range of 1.5 mm to 7 mm,
- the width being in a range of 2 mm to 6 mm,
- the width being in a range of 2.5 mm to 5 mm.

7. Spectacle lens according to any one of the preceding claims 1 to 6, **characterized in that** a 99 percentile of a surface power difference in said domain of said ring-shaped structure and a 99 percentile of a surface power difference in each domain of said further ring-shaped structures is within a maximum of 4.5 dioptres, said surface power difference being with respect to the surface power at the optical centre of the spectacle lens, said surface power difference resulting from said positive difference in z.

8. Spectacle lens according to any one of the preceding claims 1 to 7, **characterized in that** a positive difference in surface power is different from 0 dioptre relative to a surface power at the optical centre of the spectacle lens in said domain of said ring-shaped structure and a positive difference in surface power is different from 0 dioptre relative to a surface power at the optical centre of the spectacle lens in each domain of said further ring-shaped structures, said positive difference in surface power resulting from said positive difference in z.

9. Data set comprising at least one kind of the following kinds of data:
(i) data of the spectacle lens, the spectacle lens according to any one of the preceding claims 1 to 8, the data of the spectacle lens being configured for the purpose of a use of of the data for a manufacture of the spectacle lens according to any one of the preceding claims 1 to 8,
(ii) data of the spectacle lens, the spectacle lens according to any one of the preceding claims 1 to 8, the data of the spectacle lens containing computer-readable instructions for controlling one manufacturing machine or more manufacturing machines to manufacture the spectacle lens according to any one of the preceding claims 1 to 8.
